# EUROPEAN PATENT SPECIFICATION

(11) **EP 2 416 612 B1**
(45) Date of publication and mention of the grant of the patent: **28.08.2013**
(21) Application number: 10766612.5
(22) Date of filing: 15.04.2010
(51) Int. Cl.: H04W 56/00, H04W 72/04

(54) **RADIO LINK FAILURE PROCESSING METHOD AND USER EQUIPMENT**
VERFAHREN UND ENDGERÄT ZUR VERARBEITUNG VON FUNKVERBINDUNGSFEHLERN
PROCÉDÉ ET ÉQUIPEMENT UTILISATEUR POUR LE TRAITEMENT DE DÉFAILLANCE DE LIAISON RADIO

(30) Priority: 22.04.2009 WO PCT/CN2009/071411; 23.06.2009 CN 200910152301
(43) Date of publication of application: 08.02.2012
(60) Divisional application: 13172303.3
(73) Proprietor: Huawei Technologies Co., Ltd., Guangdong 518129 (CN)
(72) Inventor: CHEN, Dong, Shenzhen Guangdong 518129 (CN); MA, Jie, Shenzhen Guangdong 518129 (CN); WANG, Shukun, Shenzhen Guangdong 518129 (CN)
(74) Representative: Thun, Clemens
(86) International application number: PCT/CN2010/071781
(87) International publication number: WO 2010/121522

(56) References cited:
- EP-A1- 2 392 092
- WO-A2-2006/052565
- WO-A2-2008/086460
- CN-A- 1 855 766
- US-A1- 2008 242 292
- HUAWEI: "Discussion on RLF in DC-HSDPA", 3GPP DRAFT; R2-084402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080811, 11 August 2008 (2008-08-11), XP050319471, [retrieved on 2008-08-11]
- HUAWEI: "RLF consideration in DC-HSDPA", 3GPP DRAFT; R2-086693 RLF CONSIDERATION IN DC-HSDPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321562, [retrieved on 2008-11-04]
- LG ELECTRONICS: "Radio Link Failure for HS-DSCH", 3GPP DRAFT; R3-041171_(REL6 NBAP HS-DSCH_RL_FAILURE_CR1016R1), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Prague, Czech Republic; 20040823, 23 August 2004 (2004-08-23), XP050156915, [retrieved on 2004-08-23]

## Description

### TECHNICAL FIELD

The present invention relates to the communication field, and in particular, to a method and a user equipement for processing radio link failure.

### BACKGROUND

Radio link failure (Radio Link Failure, RLF) is categorized into uplink RLF and downlink RLF. Uplink RLF is detected by a NodeB (NodeB), and downlink RLF is detected by a user equipment (User Equipment, UE).

In a multi-carrier system, a UE detects only downlink RLF that occurs on a primary carrier (a carrier specified by a network among all carriers used by the UE). When detecting that downlink RLF occurs on the primary carrier, the UE removes the downlink radio links of all carriers (including the primary carrier and secondary carriers), changes a state to the CELL-FACH (CELL-FACH) state of a cell where the UE camps on, and sends a message to the network through a common control channel (CCCH), instructing the network to perform call drop processing. Similarly, the NodeB detects only uplink RLF that occurs on the primary carrier. When detecting that uplink RLF occurs on the primary carrier, the NodeB sends a RADIO LINK FAILURE INDICATION (RADIO LINK FAILURE INDICATION) message to a radio network controller (Radio Network Controller, RNC), instructing the RNC to perform call drop processing.

The prior art considers RLF on the primary carrier only. Therefore, the probability of communication interruption of a user is high and the communication experience of the user is deteriorated.

R2 -084402 HUAWEI: "Discussion on RLF in DC-HSDPA" discloses when RLF occurs on an anchor carrier, a UE select a suitable cell from an anchor carrier cell and a supplementary carrier cell.

### SUMMARY OF THE INVENTION

Embodiments of the present invention provide a method, a user equipement for processing RLF to reduce the communication interruption rate of communication of a user according to the claims.

### BRIEF DESCRIPTION OF THE DRAWINGS

To better explain the technical solution of the present invention, the accompanying drawings required in the description of the present invention are described below. It is apparent that the accompanying drawings illustrate only some exemplary embodiments of the present invention. Those skilled in the art can derive other drawings from these drawings without any creative effort.
FIG. 1 is a flowchart of a method for processing RLF provided in a first example;
FIG. 2 is a flowchart of a method for processing RLF provided in a second example;
FIG. 3 is a flowchart of a method for processing RLF provided in a third example;
FIG. 4 shows a structure of a UE provided in a fourth example;
FIG. 5 shows a first structure of an apparatus for processing RLF provided in a fifth example;
FIG. 6 shows a structure of an obtaining unit in the apparatus for processing RLF provided in the fifth example;
FIG. 7 shows a second structure of the apparatus for processing RLF provided in the fifth example;
FIG. 8 is a flowchart of a method for processing RLF provided in a seventh example;
FIG. 9 is a flowchart of a method for processing RLF provided in an eighth example;
FIG. 10 shows a first structure of a NodeB provided in a ninth example;
FIG. 11 shows a second structure of the NodeB provided in the ninth example;
FIG. 12 shows a first structure of an RNC provided in a tenth; example;
FIG. 13 shows a structure of an obtaining unit in the RNC provided in the tenth example;
FIG. 14 shows a second structure of the RNC provided in the tenth example;
FIG. 15 shows a structure of a system for processing RLF provided in an eleventh example; and
FIG. 16 is a flowchart of a method for processing RLF provided in an embodiment of the present invention.

### DETAILED DESCRIPTION

### Example 1

This example provides a method for processing RLF to reduce the communication interruption rate of a user.

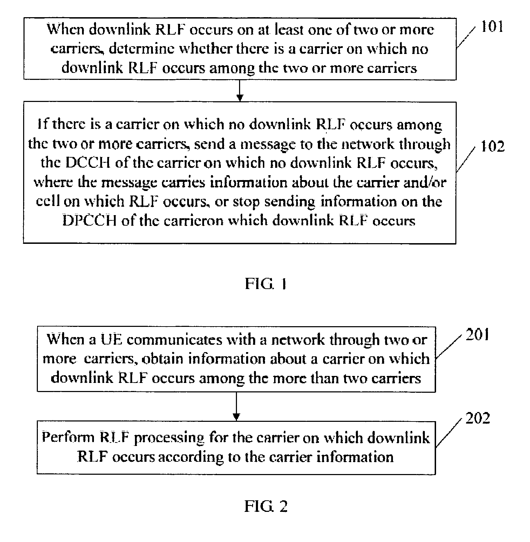

As shown in FIG. 1, the method for processing RLF includes the following steps.

101. When a UE communicates with a network through two or more carriers, if downlink RLF occurs on at least one of the two or more carriers, determine whether there is a carrier on which no downlink RLF occurs, among the two or more carriers.

102. If there is a carrier on which no downlink RLF occurs, send a message to the network through a dedicated control channel (DCCH) of the carrier on which no downlink RLF occurs, where the message carries information about the carrier and/or a cell on which the RLF occurs and instructs the network to perform RLF processing for the carrier on which the downlink RLF occurs, or stop sending information on an uplink dedicated physical control channel (DPCCH) of the carrier on which the downlink RLF occurs.

With the foregoing RLF processing method, when downlink RLF occurs on at least one carrier among the carriers used by the UE and there is at least one carrier on which no downlink RLF occurs, the UE may send a message to the network, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network through the carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Example 2

This example provides a method for processing RLF to reduce the communication interruption rate of a user.

As shown in FIG. 2, the method for processing RLF includes the following steps.

201. When a UE communicates with a network through two or more carriers, obtain information about a carrier where downlink RLF occurs among the two or more carriers.

202. Perform RLF processing for the carrier on which the downlink RLF occurs according to the carrier information.

With the foregoing RLF processing method, RLF processing can be performed for a carrier on which the downlink RLF occurs, and the UE can communicate with the network normally by using a carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Example 3

This example provides a method for processing RLF to reduce the communication interruption rate of a user.

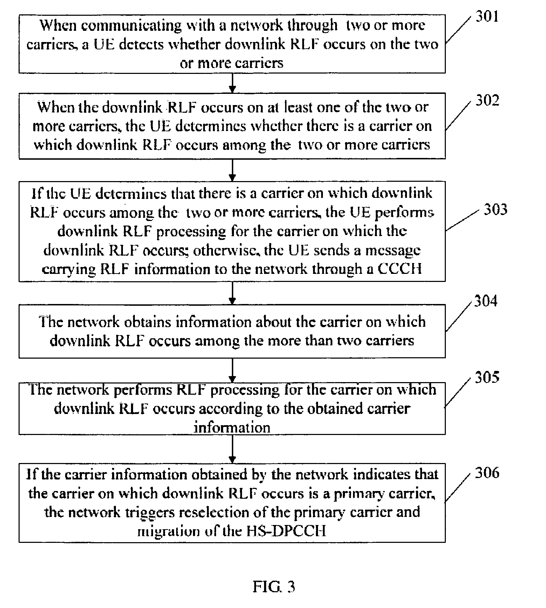

As shown in FIG. 3, the method for processing RLF includes the following steps.

301. When communicating with a network through two or more carriers, a UE detects whether downlink RLF occurs on the two or more carriers.

In this example the physical layer of the UE may detect whether downlink RLF occurs on the two or more carriers by detecting a downlink dedicated physical channel (DPCH) or fractional dedicated physical channel (F-DPCH) of the carriers. Specifically, the UE receives information from the downlink DPCH/F-DPCH of each carrier; if the UE successively receives N313 pieces of failure indications from the downlink DPCH/F-DPCH of a carrier, the UE determines that the downlink RLF occurs on the carrier; if the UE does not receive N313 pieces of failure indications from the downlink DPCH/F-DPCH of the carrier, the UE determines that the downlink RLF does not occur on the carrier.

302. When downlink RLF occurs on at least one of the two or more carriers, the UE determines whether there is a carrier on which no downlink RLF occurs among the two or more carriers. In this example, the UE may determine whether there is a carrier on which no downlink RLF occurs among the two or more carriers according to the results of downlink RLF detection of the two or more carriers in step 301.

Optionally, the two or more carriers include one primary carrier and one or more secondary carrier. If the UE determines that the carrier on which the downlink RLF occurs in step 301 is the primary carrier, the UE determines that there is not a carrier on which no downlink RLF occurs among the two or more carriers in step 302. If the UE determines that the carrier on which the downlink RLF occurs in step 301 is a secondary carrier, the UE determines that there is a carrier on which no downlink RLF occurs among the two or more carriers in step 302.

In practice, the UE may determine whether there is a carrier on which no downlink RLF occurs among the two or more carriers in other ways, which are not described here.

303. If the UE determines that there is a carrier on which no downlink RLF occurs among the two or more carriers in step 302, the UE performs downlink RLF processing for the carrier on which the downlink RLF occurs; if the UE determines that there is not a carrier on which no downlink RLF occurs among the two or more carriers in step 302, the UE sends a message carrying RLF information to the network through a CCCH.

The message carrying RLF information may be a cell update (Cell Update) message.

The UE may perform downlink RLF processing for the carrier on which the downlink RLF occurs in the following ways.

1. The UE sends a message to the network through the DCCH of the carrier on which no downlink RLF occurs, where the message carries information about the carrier and/or a cell on which the RLF occurs.

In this example the message carrying information about the carrier and/or the cell on which the RLF occurs may be a cell update (Cell Update) message, or a measurement report (Measurement Report) message, and so on.

Optionally, if the two or more carriers include two or more carriers on which no downlink RLF occurs, the UE may randomly select one of the carrier on which no downlink RLF occurs and send a message carrying information about the carrier and/or cell on which the RLF occurs to the network through the DCCH of the carrier on which no downlink RLF occurs; or, if the two or more carrier on which no downlink RLF occurs includes the primary carrier, the UE may send a message carrying information about the carrier and/or cell on which the RLF occurs to the network through the DCCH of the primary carrier; or, the UE may send a message carrying information about the carrier and/or cell on which the RLF occurs to the network through the DCCHs of the two or more carrier on which no downlink RLF occurs jointly.

2. The UE considers that the carrier on which the downlink RLF occurs is deactivated, and therefore does not send a message to the network. Meanwhile, the UE stops sending information on the uplink dedicated physical control channel (DPCCH) of the carrier on which the downlink RLF occurs.

In practice, the UE may perform downlink RLF processing for the carrier on which the downlink RLF occurs in other ways, which are not described here.

304. The network obtains information about the carrier on which the downlink RLF occurs among the two or more carriers.

If the UE sends a message carrying RLF information to the network through the CCCH in step 303, the network may receive the message carrying RLF information and obtain information about the carrier on which the downlink RLF occurs. In this case, downlink RLF occurs on all carriers of the UE.

If the UE sends a message carrying information about the carrier and/or cell on which the RLF occurs to the network through the DCCH of a carrier on which no downlink RLF occurs in step 303, the network may receive the message carrying information about the carrier and/or cell on which the RLF occurs and obtain information about the carrier which the downlink RLF occurs from the message.

If the UE does not send a message to the network, and stops sending information on the uplink DPCCH of the carrier on which the downlink RLF occurs in step 303, the network may detect the uplink DPCCHs of the two or more carriers used by the UE and obtain information about the carrier on which the downlink RLF occurs according to the detection result. Specifically, within the preset detection time, if the network does not detect data transmitted on the uplink DPCCH, the network knows that the carrier corresponding to the uplink DPCCH is a carrier on which the downlink RLF occurs.

305. The network performs RLF processing for the carrier on which the downlink RLF occurs according to the carrier information obtained in step 304.

Specifically, if the obtained carrier information indicates that downlink RLF occurs on all carriers of the UE, the network performs call drop processing according to an RRM algorithm, such as reestablishing a RRC connection; otherwise, the network removes the downlink radio link of the carrier on which the downlink RLF occurs and updates the active set, or ignores the carrier on which the downlink RLF occurs.

Optionally, the method for processing RLF may include the following step.

306. If the carrier information obtained by the network in step 304 indicates that the carrier on which the downlink RLF occurs is the primary carrier, the network triggers reselection of the primary carrier and migration of the high speed dedicated physical control channel (HS-DPCCH).

With the foregoing RLF processing method, when downlink RLF occurs on at least one carrier among the carriers used by the UE and there is a carrier on which no downlink RLF occurs among the carriers, the UE may send a message to the network through the DCCH of the carrier on which no downlink RLF occurs, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network through the carrier on which no downlink RLF occurs. Thereby, the communication interruption rate of the user is reduced, and the communication experience of the user is improved. In contrast, when downlink RLF occurs on the primary carrier of the UE in the prior art, the downlink communication between the UE and the network is interrupted, resulting in a high communication interruption rate and a poor user experience.

### Example 4

This example provides a UE to reduce the communication interruption rate of a user.

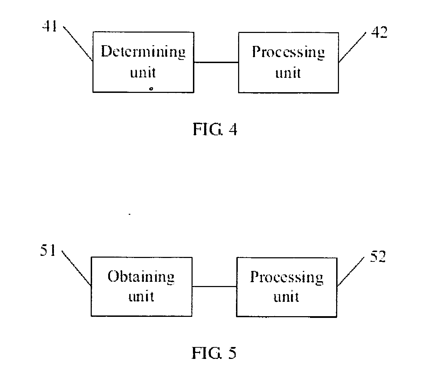

As shown in FIG. 4, the UE includes a determining unit 41 that is configured to, when the UE communicates with a network through two or more carriers, if downlink RLF occurs on at least one of the two or more carriers, determine whether there is a carrier on which no downlink RLF occurs among the two or more carriers. A processing unit 42 is configured to, if the determining unit 41 determines that there is a carrier on which no downlink RLF occurs among the two or more carriers, send a message to the network through a DCCH of the carrier on which no downlink RLF occurs, where the message carries information about the carrier and/or a cell on which the RLF occurs and instructs the network to perform RLF processing for the carrier on which the downlink RLF occurs, or stop sending information on an uplink DPCCH of the carrier on which the downlink RLF occurs.

Further, if the determining unit 41 determines that there is not a carrier on which no downlink RLF occurs among the two or more carriers, the processing unit 42 may be configured to send a message carrying RLF information to the network through a CCCH, where the message instructs the network to perform call drop processing for the UE.

For the specific implementation of the UE provided in this example, refer to the method for processing RLF provided in the third example.

In this example, when downlink RLF occurs on at least one carrier among all carriers used by the UE and there is a carrier on which no downlink RLF occurs among the carriers, the UE may send a message to the network through the DCCH of the carrier on which no downlink RLF occurs, where the message carries information about the carrier and/or cell on which the RLF occurs, or stop sending information on the uplink DPCCH of the carrier on which the downlink RLF occurs. Therefore, the network considers that uplink RLF occurs, and performs downlink RLF processing for the carrier on which the downlink RLF occurs. When the network performs downlink RLF processing for the carrier on which the downlink RLF occurs, the UE may communicate with the network normally through the carrier on which no downlink RLF occurs. Thereby, the communication interruption rate of the user is reduced, and the communication experience of the user is improved. The technical solution solves the problem in the prior art that only the RLF of the primary carrier is considered and when downlink RLF occurs on the primary carrier of the UE, the UE removes the downlink radio links of all carriers, resulting in a high communication interruption rate and poor user experience.

### Example 5

This example provides an apparatus for processing RLF to reduce the communication interruption rate of a user.

As shown in FIG. 5, the apparatus for processing RLF includes an obtaining unit 51 that is configured to, when a UE communicates with a network through two or more carriers, obtain information about a carrier where downlink RLF occurs among the two or more carriers. A processing unit 52 is configured to perform RLF processing for the carrier on which the downlink RLF occurs according to the carrier information obtained by the obtaining unit 51, and keep communicating by using a carrier on which no downlink RLF occurs among the two or more carriers.

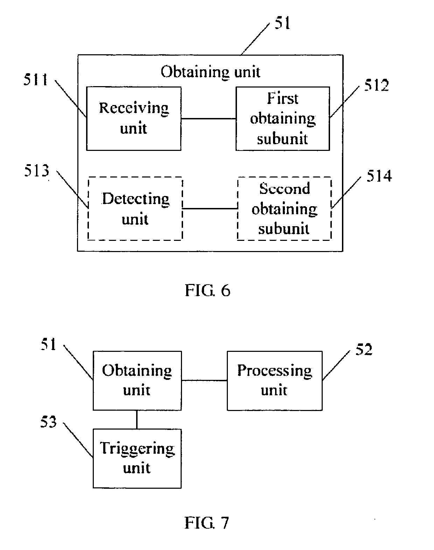

Further, as shown in FIG. 6, the obtaining unit 51 may include a receiving unit 511 that is configured to receive a message sent by the UE, where the message carries information about the carrier and/or cell on which the RLF occurs or carries downlink RLF information. A first obtaining subunit 512 is configured to obtain information about the carrier on which the downlink RLF occurs from the message received by the receiving unit 511, where the message carries information about the carrier and/or cell on which the RLF occurs or carries downlink RLF information. Alternatively, or in addition, A detecting unit 513 can be configured to detect the uplink DPCCHs of the two or more carriers, and a second obtaining subunit 514 can be configured to obtain information about the carrier on which the downlink RLF occurs according to the detection result of the detecting unit 513.

Further, as shown in FIG. 7, the apparatus for processing RLF may include a triggering unit 53 that is configured to trigger reselection of the primary carrier and migration of the HS-DPCCH when the carrier on which the downlink RLF occurs is the primary carrier.

For the specific implementation of the apparatus for processing RLF provided in this example, refer to the method for processing RLF provided in the third example.

With the foregoing RLF processing apparatus, RLF processing can be performed for a carrier on which the downlink RLF occurs, and the UE can communicate with the network normally by using a carrier on which no downlink RLF occurs. Thereby, the communication interruption rate of the user is reduced, and the communication experience of the user is improved. The technical solution solves the problem in the prior art that only the RLF of the primary carrier is considered and when downlink RLF occurs on the primary carrier of the UE, the UE removes the downlink radio links of all carriers, resulting in a high communication interruption rate and poor user experience.

The following examples deal with the processing of uplink RLF.

### Example 6

This example provides a method for processing RLF to reduce the communication interruption rate of a user.

The method for processing RLF includes, when a UE communicates with a network through two or more carriers, if uplink RLF occurs on at least one of the two or more carriers, sending a message to an RNC, where the message carries information about the carrier and/or a cell on which RLF occurs and instructs the RNC to perform uplink RLF processing for the carrier on which the uplink RLF occurs, and/or if there is a carrier on which no uplink RLF occurs among the two or more carriers, stopping sending information on a downlink DPCH/F-DPCH of the carrier on which the uplink RLF occurs.

With the foregoing RLF processing method, when uplink RLF occurs on a carrier used by the UE, the UE may send a message to the RNC, where the message carries information about the carrier and/or cell on which RLF occurs, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience. According to the technical solution provided in this example, when there is a carrier on which no uplink RLF occurs, a NodeB can stop sending information on the downlink DPCH/F-DPCH of the carrier on which uplink RLF occurs, without notifying the RNC to perform uplink RLF processing for the carrier on which the uplink RLF occurs, therefore saving network resources.

### Example 7

This example provides a method for processing RLF to reduce the communication interruption rate of a user.

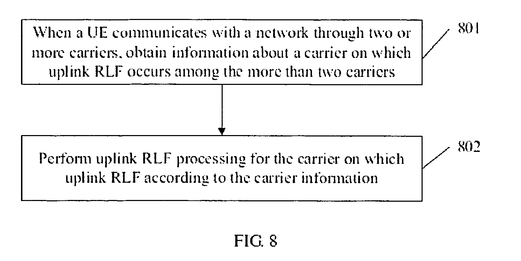

As shown in FIG. 8, the method for processing RLF includes the following steps.

801. When a UE communicates with a network through two or more carriers, obtain information about a carrier where uplink RLF occurs among the two or more carriers.

802. Perform uplink RLF processing for the carrier on which uplink RLF occurs according to the carrier information.

With the foregoing RLF processing method, RLF processing is performed for only the carrier on which uplink RLF occurs; therefore, when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience.

### Example 8

This example provides a method for processing RLF to reduce the communication interruption rate of a user.

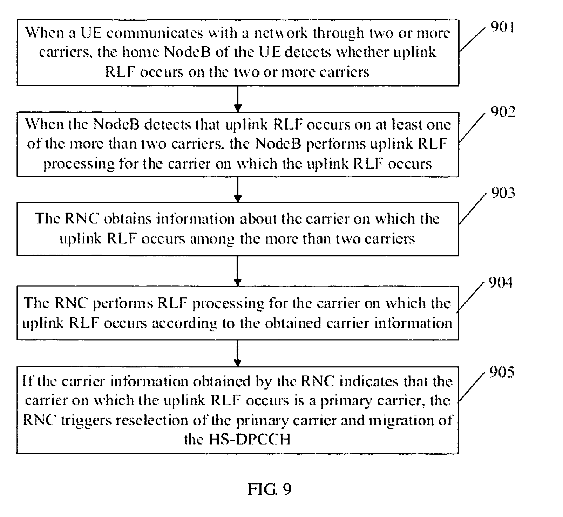

As shown in FIG. 9, the method for processing RLF includes the following steps.

901. When a UE communicates with a network through two or more carriers, the home NodeB of the UE detects whether uplink RLF occurs on the two or more carriers.

In this example, the physical layer of the NodeB may detect whether uplink RLF occurs on the two or more carriers by detecting the uplink DPCCHs of the carriers. Specifically, the NodeB receives information from the uplink DPCCH of each carrier; if the NodeB successively receives N_OUTSYNC_IND pieces of failure indications from the uplink DPCCH of a carrier, the NodeB determines that there is a carrier on which uplink RLF occurs; if the NodeB does not successively receive N_OUTSYNC_IND pieces of failure indications from the uplink DPCCH of the carrier, the UE determines that there is a carrier on which no uplink RLF occurs.

902. When the NodeB detects that uplink RLF occurs on at least one of the two or more carriers, the NodeB may perform uplink RLF processing for the carrier on which the uplink RLF occurs in the following ways.

1. The NodeB sends a message to the RNC, where the message carries information about the carrier and/or cell on which RLF occurs. In this example, the message carrying information about the carrier and/or cell on which RLF occurs may be a RADIO LINK FAILURE INDICATION (RADIO LINK FAILURE INDICATION) message.

2. If there is a carrier on which no uplink RLF occurs among the two or more carriers used by the UE, the NodeB considers that the carrier on which uplink RLF occurs is deactivated, and therefore does not send a message to the RNC. Meanwhile, the NodeB stops sending information on the downlink DPCH/F-DPCH of the carrier on which the uplink RLF occurs.

In this example, the two or more carriers used by the UE include one primary carrier and one or more secondary carrier. If the NodeB determines that the carrier on which uplink RLF occurs in step 901 is the primary carrier, the NodeB determines that there is not a carrier on which no uplink RLF occurs among the two or more carriers in step 902. If the NodeB determines that the carrier on which uplink RLF occurs in step 901 is a secondary carrier, the NodeB determines that there is a carrier on which no uplink RLF occurs among the two or more carriers in step 902.

903. The RNC obtains information about the carrier on which uplink RLF occurs among the two or more carriers.

If the NodeB sends a message carrying information about the carrier and/or cell on which RLF occurs to the RNC in step 902, the RNC may receive the message carrying information about the carrier and/or cell on which the RLF occurs and obtain information about the carrier on which the uplink RLF occurs from the message.

If the NodeB does not send a message to the RNC, and stops sending information on the downlink DPCH/F-DPCH of the carrier on which the uplink RLF occurs in step 902, the RNC may detect the downlink DPCHs/F-DPCHs of the two or more carriers used by the UE and obtain information about the carrier on which the uplink RLF occurs according to the detection result. Specifically, within the preset detection time, if the RNC does not detect data transmitted on the downlink DPCH/F-DPCH, the RNC knows that the uplink RLF occurs on the carrier corresponding to the downlink DPCH/F-DPCH.

904. The RNC performs RLF processing for the carrier on which the uplink RLF occurs according to the carrier information obtained in step 903.

Specifically, the RNC may determine whether uplink RLF occurs on all carriers used by the UE according to the preceding carrier information; if the uplink RLF does not occur on all carriers used by the UE, the RNC removes the uplink radio link of the carrier on which the uplink RLF occurs and updates the active set, or ignores the carrier on which the uplink RLF occurs; if the uplink RLF occurs on all carriers used by the UE, the RNC performs call drop processing for the UE such as reestablishing an RRC connection.

Optionally, the method for processing RLF may include the following step.

905. If the carrier information obtained by the RNC in step 903 indicates that the carrier on which uplink RLF occurs is the primary carrier, the RNC triggers reselection of the primary carrier and migration of a high speed dedicated physical control channel (HS-DPCCH).

With the foregoing RLF processing method, when uplink RLF occurs on a carrier used by the UE, the NodeB may send a message to the RNC, where the message carries information about the carrier and/or cell on which RLF occurs, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, when uplink RLF occurs on the primary carrier of the UE in the prior art, the communication of the user is interrupted, resulting in a high communication interruption rate and a poor user experience. According to the technical solution provided in this example, when there is a carrier on which no uplink RLF occurs, the NodeB can stop sending information on the downlink DPCH/F-DPCH of the carrier on which uplink RLF occurs, without notifying the RNC to perform uplink RLF processing for the carrier on which the uplink RLF occurs, therefore saving network resources.

### Example 9

This example provides a NodeB to reduce the communication interruption rate of a user.

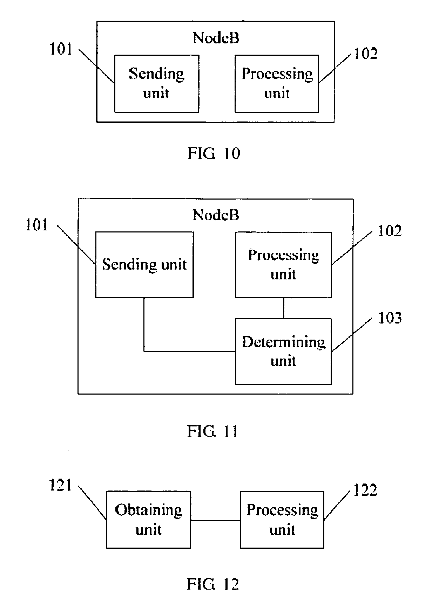

As shown in FIG. 10, the NodeB includes a sending unit 101 that is configured to, when a UE communicates with a network through two or more carriers, if uplink RLF occurs on at least one of the two or more carriers, send a message to an RNC, where the message carries information about the carrier and/or a cell on which RLF occurs and instructs the RNC to perform uplink RLF processing for the carrier on which the uplink RLF occurs. Alternatively, or in addition, a processing unit 102 can be configured to stop sending information on a downlink DPCH of the carrier on which uplink RLF occurs when the UE communicates with the network through the two or more carriers, if uplink RLF occurs on at least one of the two or more carriers and there is a carrier on which no uplink RLF occurs among the two or more carriers.

Further, as shown in FIG. 11, the NodeB may further include a determining unit 103 that is configured to, when the carrier on which uplink RLF occurs is a secondary carrier, determine that there is a carrier on which no uplink RLF occurs among the two or more carriers, and instruct the processing unit 102 to stop sending information on the downlink DPCH of the carrier on which the uplink RLF occurs. When the carrier on which uplink RLF occurs is a primary carrier, the determining unit is configured to determine that there is not a carrier on which no uplink RLF occurs among the two or more carriers, and to instruct the sending unit 101 to send a message carrying information about the carrier and/or cell on which the RLF occurs to the RNC.

For the specific implementation of the NodeB provided in this example, refer to the method for processing RLF provided in the eighth example.

In this example, when uplink RLF occurs on a carrier used by the UE, the NodeB may send a message carrying information about the carrier and/or cell on which RLF occurs to the RNC, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only uplink RLF of the primary carrier, and when uplink RLF occurs on the primary carrier of the UE, the communication of the user is interrupted, resulting in a high communication interruption rate and a poor user experience. According to the technical solution provided in this example, when there is a carrier on which no uplink RLF occurs, the NodeB can stop sending information on the downlink DPCH of the carrier on which uplink RLF occurs, without notifying the RNC to perform uplink RLF processing for the carrier on which the uplink RLF occurs, therefore saving network resources.

### Example 10

This example provides an RNC to reduce the communication interruption rate of a user.

As shown in FIG. 12, the RNC includes an obtaining unit 121 that is configured to, when a UE communicates with a network through two or more carriers, obtain information about a carrier where uplink RLF occurs among the two or more carriersA processing unit 122 is configured to perform uplink RLF processing for the carrier on which uplink RLF occurs according to the carrier information obtained by the obtaining unit 121.

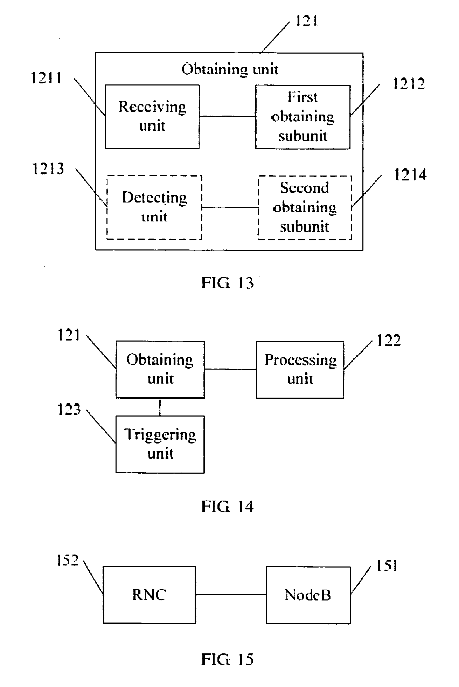

Further, as shown in FIG. 13, the obtaining unit 121 may include a receiving unit 1211 that is configured to receive a message sent by a NodeB, where the message carries information about the carrier and/or cell on which RLF occurs, A first obtaining subunit 1212 is configured to obtain information about the carrier on which uplink RLF occurs from the message received by the receiving unit 1211, and/or a detecting unit 1213 is configured to detect the downlink DPCHs of the two or more carriers, and a second obtaining subunit 1214 is configured to obtain information about the carrier on which uplink RLF occurs according to the detection result of the detecting unit 1213.

Further, as shown in FIG. 14, the RNC may further include a triggering unit 123 that is configured to trigger reselection of the primary carrier and migration of the HS-DPCCH when the carrier on which uplink RLF occurs is the primary carrier.

For the specific implementation of the RNC provided in this example, refer to the method for processing RLF provided in the eighth example.

With the foregoing RNC, uplink RLF processing is performed for only the carrier on which uplink RLF occurs; therefore, when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only the RLF of the primary carrier, and when uplink RLF occurs on the primary carrier of the UE, the communication of the user will be interrupted, resulting in a high communication interruption rate and a poor user experience.

### Example 11

This example provides a system for processing RLF to reduce the communication interruption rate of a user.

As shown in FIG. 15, the RLF processing system includes a NodeB 151 and an RNC 152.

The NodeB 151 is configured to, when a UE communicates with a network through two or more carriers, if uplink RLF occurs on at least one of the two or more carriers, send a message to the RNC 152, where the message carries information about the carrier and/or a cell on which RLF occurs, and/or when there is a carrier on which no uplink RLF occurs among the two or more carriers, stop sending information on a downlink DPCH of the carrier on which uplink RLF occurs.

The RNC 152 is configured to receive the message carrying information about the carrier and/or cell on which RLF occurs sent by the NodeB 151, and obtain information about the carrier on which the uplink RLF occurs from the message, or detect downlink DPCHs of the two or more carriers, obtain information about the carrier on which the uplink RLF occurs according to a detection result, and perform uplink RLF processing for the carrier on which the uplink RLF occurs according to the obtained carrier information.

With the foregoing RLF processing system, when uplink RLF occurs on a carrier used by the UE, the NodeB may send a message carrying information about the carrier and/or cell on which RLF occurs to the RNC, so that the RNC may perform uplink RLF processing for only the carrier on which uplink RLF occurs; when the carriers used by the UE include a carrier on which no uplink RLF occurs, the UE can communicate with the network normally through the carrier on which no uplink RLF occurs. Thereby, the communication interruption rate of the user is reduced, and the communication experience of the user is improved. In contrast, the prior art considers only uplink RLF of the primary carrier, and when uplink RLF occurs on the primary carrier of the UE, the communication of the user will be interrupted, resulting in a high communication interruption rate and a poor user experience. According to the technical solution provided in this example, when there is a carrier on which no uplink RLF occurs exists, the NodeB can stop sending information on the downlink DPCH of the carrier on which uplink RLF occurs, without notifying the RNC to perform uplink RLF processing for the carrier on which the uplink RLF occurs, therefore saving network resources.

### Embodiment

This embodiment provides a method for processing RLF to reduce the communication interruption rate of a user.

In this embodiment, a UE communicates with a network through two or more carriers, where the two or more carriers include a primary carrier and at least one secondary carrier.

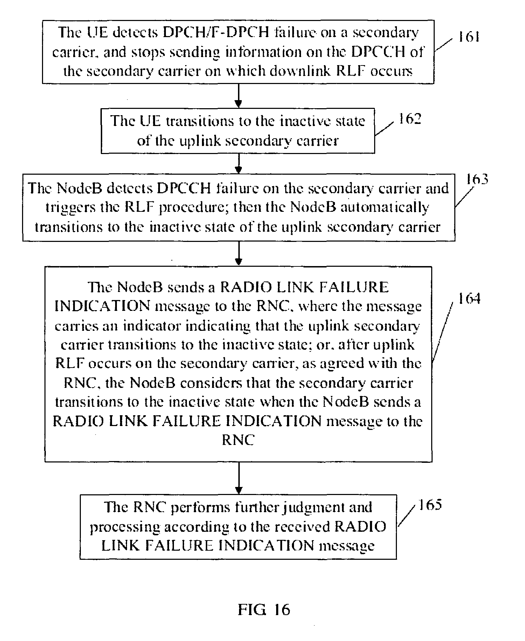

As shown in FIG. 16, the method for processing RLF includes the following steps.

161 The UE detects downlink RLF by monitoring DPCH/F-DPCH on a secondary carrier, and stops sending information on the uplink dedicated physical control channel (DPCCH) of the secondary carrier on which the downlink RLF occurs.

162. The UE changes the state of the uplink secondary carrier to an inactive state, and directly discards unacknowledged data or data that is retransmitted upon acknowledgement of transmission failure, or sends information on the primary carrier instead.

163. The NodeB detects DPCCH failure on the secondary carrier and triggers the RLF procedure. Then the NodeB automatically changes the state of the uplink secondary carrier to an inactive state. When the UE and NodeB both change the state of the uplink carrier to an inactive state, it indicates that the state of the uplink carrier changes to the inactive state.

164. The NodeB sends a RADIO LINK FAILURE INDICATION (RADIO LINK FAILURE INDICATION) message to the RNC, where the message carries an indication indicating that the state of the uplink secondary carrier changes to the inactive state; or, after uplink RLF occurs on the secondary carrier, as agreed with the RNC, the NodeB considers that the state of the secondary carrier changes to the inactive state when the NodeB sends a RADIO LINK FAILURE INDICATION message to the RNC.

165. The RNC performs further judgment and processing according to the received RADIO LINK FAILURE INDICATION message. If the RNC determines that the state of the uplink carrier changes to the inactive state according to the RADIO LINK FAILURE INDICATION message, the RNC forwards the deactivation information of the secondary carrier to other NodeBs in the active set; or, if the RNC determines that radio link reconfiguration is required on an uplink single carrier according to the RADIO LINK FAILURE INDICATION message, the RNC removes the radio link from the active set of the secondary carrier.

With the foregoing RLF processing method, when downlink RLF occurs on a secondary carrier used by the UE, the UE sets the state of the uplink secondary carrier to an inactive state and stops sending information on the DPCCH, therefore causing the NodeB to detect DPCCH failure on the secondary carrier and triggering the RLF procedure. Then the NodeB automatically changes to the state of the secondary carrier to an inactive state. By reporting indication information to the RNC or according to the agreement between the NodeB and the RNC, the NodeB tells the RNC that the state of the secondary carrier changes to the inactive state. Therefore, the RNC does not need to remove the secondary carrier on which the downlink RLF occurs. When the secondary carrier needs to be used at the next time, it is only necessary to send an Activate command, therefore reducing the delay in secondary carrier reestablishment and reducing the communication interruption rate of the user.

The method, apparatus, and system for processing RLF provided in the embodiment of the present invention are applicable to a multi-carrier system, such as a multi-carrier wideband code division multiple access (WCDMA) system.

It is understandable to those skilled in the art that all or part of the steps of the foregoing embodiment$ may be implemented by hardware instructed by a computer program. The program may be stored in a computer-readable storage medium. When being executed, the program performs the procedures covered in the foregoing embodiments. The storage medium may be a magnetic disk, a compact disk-read only memory (CD-ROM), a read-only memory (read-only memory, ROM) or a random access memory (random access memory, RAM).

Although the invention has been described through some exemplary embodiment, the invention is not limited to such embodiment. It is apparent that those skilled in the art can make various modifications and substitutions to the invention without departing from the protection scope of the invention. The invention is intended to cover the modifications and substitutions provided that they fall within the scope of protection defined by the claims or their equivalents.

## Claims

1. A method for processing radio link failure, RLF, comprising:
determining whether a downlink RLF occurs on a primary carrier or at least one secondary carrier when a user equipment, UE, communicates with a network through the primary carrier and the at least one secondary carrier; and
stopping, by the UE, sending information on an uplink dedicated physical control channel, DPCCH, of a secondary carrier of the at least one secondary carrier if the downlink RLF occurs on the secondary carrier;
keeping communication between the UE and the network through one or more other carriers on where the downlink RLF does not occur; and
setting a state of the secondary carrier to an inactive state after the UE stops sending the information on the uplink DPCCH.

2. The method of claim 1, further comprising:
sending (303), by the UE, a message carrying RLF information to the network through a common control channel, CCCH, if the downlink RLF occurs on the primary carrier, wherein the message carrying the RLF information instructs the network to perform call drop processing for the UE.

3. The method of claim 2, wherein the message comprises a cell update message or a measurement report message.

4. The method of claim 1, wherein determining, by the UE, whether the downlink RLF occurs on the primary carrier or the at least one secondary carrier comprises detecting downlink dedicated physical channels, DPCHs, or downlink fractional dedicated physical channels, F-DPCHs, of the primary carrier and the at least one secondary carrier.

5. The method of claim 4, further comprising:
receiving, by the UE, information from one of the downlink DPCH and the downlink F-DPCH of each carrier through which the UE communicates with the network; and
determining, by the UE, that the downlink RLF occurs on a carrier through which the UE communicates with the network if successively receiving N313 pieces of failure indications from the one of the downlink DPCH and the downlink F-DPCH of the carrier.

6. The method of claim 4, further comprising:
receiving information from one of the downlink DPCH and the downlink F-DPCH of each carrier through which the UE communicates with the network; and
determining, by the UE, that the downlink RLF does not occur on a carrier if the UE does not receive N313 pieces of failure indications from the one of the downlink DPCH and the downlink F-DPCH of the carrier.

7. A user equipment, UE, comprising:
a determining unit (41) configured to determine whether a downlink RLF occurs on a primary carrier or at least one secondary carrier when the UE communicates with a network through the primary carrier and the at least one secondary carrier; and
a processing unit (42) configured to stop sending information on an uplink dedicated physical control channel, DPCCH, of a secondary carrier of the at least one secondary carrier if the downlink RLF occurs on the secondary carrier, keep communication between the UE and the network through one or more other carriers where the downlink RLF does not occur, and set a state of the secondary carrier to an inactive state if the downlink RLF occurs on the secondary carrier.

8. The UE of claim 7, wherein the processing unit (42) is further configured to send a message carrying RLF information to the network through a common control channel, CCCH, if the determining unit determines that the downlink RLF occurs on the primary carrier, wherein the message carrying the RLF information instructs the network to perform call drop processing for the UE.

9. The UE of claim 8, wherein the message comprises a cell update message or a measurement report message.

10. The UE of claim 7, wherein the determining unit is further configured to detect downlink dedicated physical channels, DPCHs, or downlink fractional dedicated physical channels, F-DPCHs, of the primary carrier and the at least one secondary carrier.

11. The UE of claim 10, wherein the determining unit (41) is further configured to receive information from one of the downlink DPCH or the downlink F-DPCH of each carrier of the primary carrier and the at least one secondary carrier, and to determine that the downlink RLF occurs on a carrier that is one of the primary carrier and the at least one secondary carrier if successively receiving N313 pieces of failure indications from the one of the downlink DPCH and the downlink F-DPCH of the carrier.

12. The UE of claim 10, wherein the determining unit (41) is further configured to receive information from one of the downlink DPCH or the downlink F-DPCH of each carrier of the primary carrier and the at least one secondary carrier, and to determine that the downlink RLF does not occur on a carrier if N313 pieces of failure indications are not received from the one of the downlink DPCH and the downlink F-DPCH of the carrier.

13. A computer readable medium comprising a computer program stored in a non-transitory medium that, when executed by a computer unit, will cause the computer unit to perform the steps of a user equipment according to any one of claims 1 to 6.

## Patentansprüche

1. Verfahren zum Verarbeiten eines Funkverbindungsausfalls, RLF (Radio Link Failure), das Folgendes umfasst:
Bestimmen, ob ein Downlink-RLF auf einem primären Träger oder mindestens einem sekundären Träger auftritt, wenn ein Endgerät, UE (User Equipment), durch den primären Träger und den mindestens einen sekundären Träger mit einem Netzwerk kommuniziert; und
Stoppen, durch das UE, des Sendens von Informationen auf einem fest zugeordneten physischen Uplink-Steuerkanal, DPCCH (Dedicated Physical Control Channel), eines sekundären Trägers des mindestens einen sekundären Trägers, falls der Downlink-RLF auf dem sekundären Träger auftritt;
Halten einer Kommunikation zwischen dem UE und dem Netzwerk durch einen oder mehrere andere Träger dort, wo der Downlink-RLF nicht auftritt; und
Einstellen eines Status des sekundären Trägers zu einem inaktiven Zustand, wenn das UE das Senden der Informationen auf dem Uplink-DPCCH stoppt.

2. Verfahren nach Anspruch 1, das weiterhin Folgendes umfasst:
Senden (303) durch das UE, einer RLF-Informationen führenden Nachricht zu dem Netzwerk durch einen gemeinsamen Steuerkanal, CCCH (Common Control Channel), falls der Downlink-RLF auf dem primären Träger auftritt, wobei die die RLF-Informationen führende Nachricht das Netzwerk anweist, eine Verbindungsabbruchverarbeitung für das UE durchzuführen.

3. Verfahren nach Anspruch 2, wobei die Nachricht eine Zellaktualisierungsnachricht oder eine Messberichtsnachricht umfasst.

4. Verfahren nach Anspruch 1, wobei das Bestimmen, durch das UE, ob der Downlink-RLF auf dem primären Träger oder dem mindestens einen sekundären Träger auftritt, das Detektieren fest zugeordneter physischer Downlink-Kanäle, DPCHs (Dedicated Physical Channels), oder von fest zugeordneten physischen Downlink-Teilkanälen, F-DPCHs (Fractional Dedicated Physical Channels), des primären Trägers und des mindestens einen sekundären Trägers umfasst.

5. Verfahren nach Anspruch 4, das weiterhin Folgendes umfasst:
Empfangen, durch das UE, von Informationen von dem Downlink-DPCH oder dem Downlink-F-DPCH jedes Trägers, durch den das UE mit dem Netzwerk kommuniziert; und
Bestimmen, durch das UE, dass der Downlink-RLF auf einem Träger auftritt, durch den das UE mit dem Netzwerk kommuniziert, falls N313 Teile an Versagensanzeigen von dem Downlink-DPCH oder dem Downlink-F-DPCH des Trägers nacheinander empfangen werden.

6. Verfahren nach Anspruch 4, das weiterhin Folgendes umfasst:
Empfangen von Informationen von dem Downlink-DPCH oder dem Downlink-F-DPCH jedes Trägers, durch den das UE mit dem Netzwerk kommuniziert; und
Bestimmen, durch das UE, dass der Downlink-RLF nicht auf einem Träger auftritt, falls das UE nicht N313 Teile von Versagensanzeigen von dem Downlink-DPCH oder dem Downlink-F-DPCH des Trägers empfängt.

7. Endgerät, UE (User Equipment), das Folgendes umfasst:
eine Bestimmungseinheit (41), die konfiguriert ist zum Bestimmen, ob ein Downlink-RLF auf einem primären Träger oder mindestens einem sekundären Träger auftritt, wenn das UE durch den primären Träger und den mindestens einen sekundären Träger mit einem Netzwerk kommuniziert; und
eine Verarbeitungseinheit (42), die konfiguriert ist zum Stoppen des Sendens von Informationen auf einem fest zugeordneten physischen Uplink-Steuerkanal, DPCCH (Dedicated Physical Control Channel), eines sekundären Trägers des mindestens einen sekundären Trägers, falls der Downlink-RLF auf dem sekundären Träger auftritt, Halten einer Kommunikation zwischen dem UE und dem Netzwerk durch einen oder mehrere andere Träger dort, wo der Downlink-RLF nicht auftritt und Einstellen eines Status des sekundären Trägers zu einem inaktiven Zustand, falls der Downlink-RLF auf dem sekundären Träger auftritt.

8. UE nach Anspruch 7, wobei die Verarbeitungseinheit (42) weiterhin konfiguriert ist zum Senden einer RLF-Informationen führenden Nachricht zum Netzwerk durch einen gemeinsamen Steuerkanal, CCCH (Common Control Channel), falls die Bestimmungseinheit bestimmt, dass der Downlink-RLF auf dem primären Träger auftritt, wobei die die RLF-Informationen führende Nachricht das Netzwerk anweist, eine Verbindungsabbruchverarbeitung für das UE durchzuführen.

9. UE nach Anspruch 8, wobei die Nachricht eine Zellaktualisierungsnachricht oder eine Messberichtsnachricht umfasst.

10. UE nach Anspruch 7, wobei die Bestimmungseinheit weiterhin konfiguriert ist zum Detektieren von fest zugeordneten physischen Downlink-Kanälen, DPCHs (Dedicated Physical Channels), oder von fest zugeordneten physischen Downlink-Teilkanälen, F-DPCHs (Fractional Dedicated Physical Channels), des primären Trägers und des mindestens einen sekundären Trägers.

11. UE nach Anspruch 10, wobei die Bestimmungseinheit (41) weiterhin konfiguriert ist zum Empfangen von Informationen von dem Downlink-DPCH oder dem Downlink-F-DPCH jedes Trägers des primären Trägers und des mindestens einen sekundären Trägers und zum Bestimmen, dass der Downlink-RLF auf einem Träger auftritt, der der primäre Träger oder der mindestens eine sekundäre Träger ist, falls N313 Teile von Versagensanzeigen von dem Downlink-DPCH oder dem Downlink-F-DPCH des Trägers nacheinander empfangen werden.

12. UE nach Anspruch 10, wobei die Bestimmungseinheit (41) weiterhin konfiguriert ist zum Empfangen von Informationen von dem Downlink-DPCH oder dem Downlink-F-DPCH jedes Trägers des primären Trägers und des mindestens einen sekundären Trägers und zum Bestimmen, dass der Downlink-RLF nicht auf einem Träger auftritt, falls N313 Teile von Versagensanzeigen nicht von dem Downlink-DPCH oder dem Downlink-F-DPCH des Trägers empfangen werden.

13. Computerlesbares Medium, umfassend ein in einem nicht vorübergehenden Medium gespeichertes Computerprogramm, das bei Ausführen durch eine Computereinheit bewirkt, dass die Computereinheit die Schritte eines Endgeräts gemäß einem der Ansprüche 1 bis 6 durchführt.

## Revendications

1. Procédé permettant de traiter un échec de liaison radio, RLF, comprenant les étapes suivantes :
déterminer si un RLF de liaison descendante se produit sur une porteuse primaire ou au moins une porteuse secondaire lorsqu'un équipement utilisateur, UE, communique avec un réseau par l'intermédiaire de la porteuse primaire et de ladite porteuse secondaire ; et
arrêter, par l'UE, l'envoi d'informations sur un canal de contrôle physique dédié de liaison montante, DPCCH, d'une porteuse secondaire de ladite porteuse secondaire si le RLF de liaison descendante se produit sur la porteuse secondaire ;
maintenir une communication entre l'UE et le réseau par l'intermédiaire d'une ou plusieurs autres porteuses à un endroit où le RLF de liaison descendante ne se produit pas ; et
mettre un état de la porteuse secondaire à un état inactif après que l'UE a arrêté d'envoyer les informations sur le DPCCH de liaison montante.

2. Procédé selon la revendication 1, comprenant en outre les étapes suivantes :
envoyer (303), par l'UE, un message contenant des informations RLF au réseau par l'intermédiaire d'un canal de contrôle commun, CCCH, si le RLF de liaison descendante se produit sur la porteuse primaire, le message contenant les informations RLF commandant au réseau d'exécuter un traitement d'interruption d'appel pour l'UE.

3. Procédé selon la revendication 2, dans lequel le message comprend un message de mise à jour de cellule ou un message de rapport de mesure.

4. Procédé selon la revendication 1, dans lequel l'étape consistant à déterminer, par l'UE, si le RLF de liaison descendante se produit sur la porteuse primaire ou sur ladite porteuse secondaire comprend l'étape consistant à détecter des canaux physiques dédiés de liaison descendante, DPCH, ou des canaux physiques dédiés fractionnels de liaison descendante, F-DPCH, de la porteuse primaire et de ladite porteuse secondaire.

5. Procédé selon la revendication 4, comprenant en outre les étapes suivantes :
recevoir, par l'UE, des informations à partir d'un canal parmi le DPCH de liaison descendante et le F-DPCH de liaison descendante de chaque porteuse par l'intermédiaire de laquelle l'UE communique avec le réseau ; et
déterminer, par l'UE, que le RLF de liaison descendante se produit sur une porteuse par l'intermédiaire de laquelle l'UE communique avec le réseau en cas de réception réussie de N313 éléments d'indications d'échec à partir du DPCH de liaison descendante ou du F-DPCH de liaison descendante de la porteuse.

6. Procédé selon la revendication 4, comprenant en outre les étapes suivantes :
recevoir des informations à partir d'un canal parmi le DPCH de liaison descendante et le F-DPCH de liaison descendante de chaque porteuse par l'intermédiaire de laquelle l'UE communique avec le réseau ; et
déterminer, par l'UE, que le RLF de liaison descendante ne se produit pas sur une porteuse si l'UE ne reçoit pas N313 éléments d'indications d'échec à partir du DPCH de liaison descendante ou du F-DPCH de liaison descendante de la porteuse.

7. Équipement utilisateur, UE, comprenant :
une unité de détermination (41) configurée pour déterminer si un RLF de liaison descendante se produit sur une porteuse primaire ou au moins une porteuse secondaire lorsque l'UE communique avec un réseau par l'intermédiaire de la porteuse primaire et de ladite porteuse secondaire ; et
une unité de traitement (42) configurée pour arrêter l'envoi d'informations sur un canal de contrôle physique dédié de liaison montante, DPCCH, d'une porteuse secondaire de ladite porteuse secondaire si le RLF de liaison descendante se produit sur la porteuse secondaire, maintenir une communication entre l'UE et le réseau par l'intermédiaire d'une ou plusieurs autres porteuses à un endroit où le RLF de liaison descendante ne se produit pas, et mettre un état de la porteuse secondaire à un état inactif si le RLF de liaison descendante se produit sur la porteuse secondaire.

8. UE selon la revendication 7, dans lequel l'unité de traitement (42) est en outre configurée pour envoyer un message contenant des informations RLF au réseau par l'intermédiaire d'un canal de contrôle commun, CCCH, si l'unité de détermination détermine que le RLF de liaison descendante se produit sur la porteuse primaire, le message contenant les informations RLF commandant au réseau d'exécuter un traitement d'interruption d'appel pour l'UE.

9. UE selon la revendication 8, dans lequel le message comprend un message de mise à jour de cellule ou un message de rapport de mesure.

10. UE selon la revendication 7, dans lequel l'unité de détermination est en outre configurée pour détecter des canaux physiques dédiés de liaison descendante, DPCH, ou des canaux physiques dédiés fractionnels de liaison descendante, F-DPCH, de la porteuse primaire et de ladite porteuse secondaire.

11. UE selon la revendication 10, dans lequel l'unité de détermination (41) est en outre configurée pour recevoir des informations à partir d'un canal parmi le DPCH de liaison descendante et le F-DPCH de liaison descendante de chaque porteuse de la porteuse primaire et de ladite porteuse secondaire, et pour déterminer que le RLF de liaison descendante se produit sur une porteuse qui est une parmi la porteuse primaire et ladite porteuse secondaire en cas de réception réussie de N313 éléments d'indications d'échec à partir du DPCH de liaison descendante ou du F-DPCH de liaison descendante de la porteuse.

12. UE selon la revendication 10, dans lequel l'unité de détermination (41) est en outre configurée pour recevoir des informations à partir d'un canal parmi le DPCH de liaison descendante et le F-DPCH de liaison descendante de chaque porteuse de la porteuse primaire et de ladite porteuse secondaire, et pour déterminer que le RLF de liaison descendante ne se produit pas sur une porteuse si N313 éléments d'indications d'échec ne sont pas reçus à partir du DPCH de liaison descendante ou du F-DPCH de liaison descendante de la porteuse.

13. Support exploitable par ordinateur comprenant un programme informatique stocké sur un support non transitoire qui, lorsqu'il sera exécuté par une unité d'ordinateur, amènera l'unité d'ordinateur à exécuter les étapes d'un équipement utilisateur selon l'une quelconque des revendications 1 à 6.
